# EUROPEAN PATENT APPLICATION

(11) **EP 2 075 206 A1**
(43) Date of publication of application: **01.07.2009**
(21) Application number: 08020462.1
(22) Date of filing: 25.11.2008
(51) Int. Cl.: B65G 39/16

(54) **Conveyor**

(30) Priority: 28.12.2007 JP 2007340150
(71) Applicant: Murata Machinery, Ltd., Minami-ku Kyoto-shi Kyoto 601-8326 (JP)
(72) Inventor: Murayama, Hiroshi, Inuyama-shi Aichi 484-8502 (JP)
(74) Representative: Schoppe, Fritz

(57) **Abstract**

There is provided a belt conveyor including a pair of right and left detection rollers (8,9) which are disposed outside both ends in a width direction of the belt, and a pair of correction rollers (10,11) which are disposed on right and left sides on a rear face of the belt. When one of the right and left detection rollers is pressed by the belt, the corresponding correction roller is inclined from the pressed detection roller down to a center of the belt, thereby easily realizing correction of the meandering belt.

## Description

### BACKGROUND OF THE INVENTION

### 1. Field of the Invention

The present invention relates to a belt conveyor, and particularly relates to correction of a meandering conveyor.

### 2. Description of the Related Art

A belt conveyor has a problem during operation such as horizontal misalignment of a belt to result in meandering. The applicant has proposed, in order to realize correction of a meandering belt, a technique of detecting with a sensor horizontal misalignment of the belt and lifting up a meandering correction roller with a motor (Refer to Japanese Unexamined Utility Model Application No. H01(1989)-58517). However, this technique requires a large mechanism provided with the sensor which detects horizontal misalignment and the motor for meandering correction. The present inventor has thus considered a more convenient method for correcting a meandering belt conveyor to achieve the present invention.

### SUMMARY OF THE INVENTION

In order to overcome the problem described above, it is an object of the present invention to correct a meandering belt of a conveyor without using a meandering detection sensor. It is another object of the present invention to correct a meandering belt by actuating a correction roller without using a lifting motor.

The present invention provides a belt conveyor including a corrector for a meandering belt, the meandering corrector having: a pair of right and left detection rollers which are disposed outside both outer ends in a width direction of the belt; at least a pair of right and left correction rollers which are disposed on right and left sides under the belt so as to be in contact with a rear face of the belt to correct the meandering belt; and inclining means for inclining, in a case where one of the right and left detection rollers is pressed by the belt, the correction roller disposed on one of right and left sides identical to the pressed detection roller such that the correction roller is inclined from the pressed detection roller down to a center of the belt. Preferably, the inclining means has: a pair of right and left cams each of which has a face inclined from the outer end down to the center of the belt and is shifted to right and left below the rear face of the belt in conjunction with the corresponding detection roller; and supporting members which are lifted along the inclined faces of the cams and regulate levels of the correction rollers in right and left directions of the belt. More preferably, the belt conveyor further includes: a frame which is disposed to be across from right to left below the rear face of the belt; and a pair of biasing members which bias the pair of cams toward the center of the belt, wherein the pair of cams are attached to the frame so as to be slidable to right and left, and lower ends of support rods of the pair of detection rollers are attached respectively to the pair of right and left cams.

According to the present invention, when the belt meanders to press one of the right and left detection rollers, the inclining means inclines the correction roller disposed on a side identical to the pressed detection roller so that the correction roller is inclined from a an outer end down to the center of the belt. Accordingly, the belt is applied with force to cancel the meandering. The present invention realizes cancellation of meandering without using a sensor which detects a meandering belt.

When the detection roller is pressed by the belt, it is preferable to shift to right or left the corresponding cam below the rear face of the belt so as to incline the correction roller by combining the cam face inclined from the right or left end down to the center of the belt with the supporting member of the correction roller which is lifted along the inclined face of the cam. Such a configuration requires no motor which drives a correction roller. Accordingly, there is provided a meandering corrector which promptly and surely responds to meandering and causes less malfunction. More preferably, the pair of cams are attached slidably to right and left to the frame disposed to be across from right to left below the rear face of the belt, the lower ends of the support rods of the pair of detection rollers are attached respectively to the pair of right and left cams, and there are provided the pair of biasing members which respectively bias the pair of cams toward the center of the rear face of the belt. In this configuration, when one of the detection rollers is pressed by the belt and is shifted, the corresponding cam can be surely shifted and the corresponding correction roller can be regulated to be inclined in accordance with a degree of meandering of the belt.
Other features, elements, processes, steps, characteristics and advantages of the present invention will become more apparent from the following detailed description of preferred embodiments of the present invention with reference to the attached drawings.

### BRIEF DESCRIPTION OF THE DRAWINGS

Fig. 1 is a plan view illustrating a main part of a conveyor with a partial cutout, according to an embodiment of the present invention;
Fig. 2 is a vertical cross sectional] view of the main part of the conveyor according to the embodiment of the present invention;
Fig. 3 is a view illustrating an operating state according to the embodiment of the present invention; and
Fig. 4 is a vertical cross sectional] view of a main part of a conveyor according to a modification of the present invention.

### DETAILED DESCRIPTION OF PREFERRED EMBODIMENTS

Described below is a most preferred embodiment of the present invention.

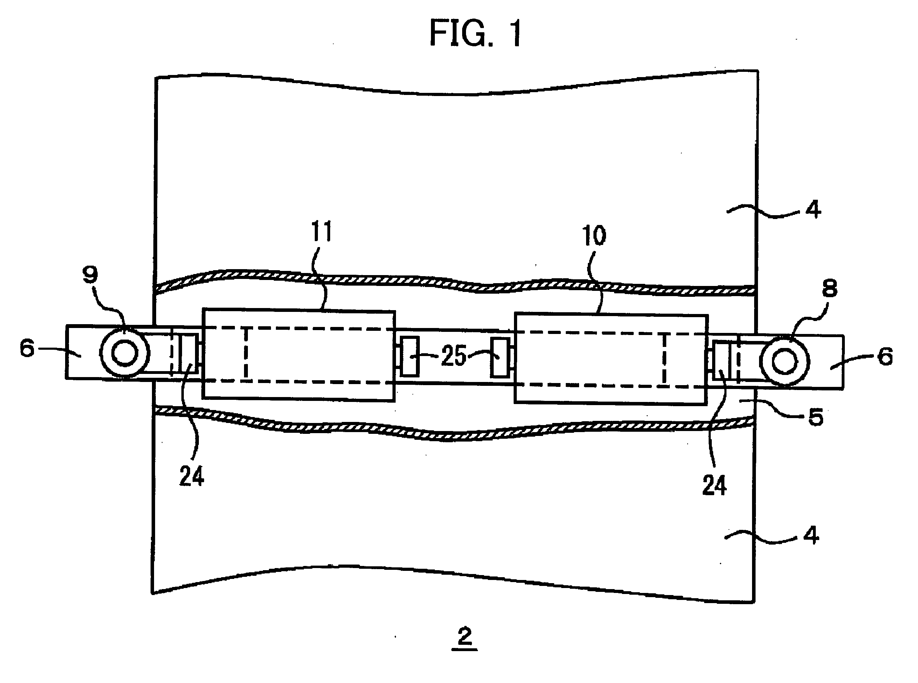

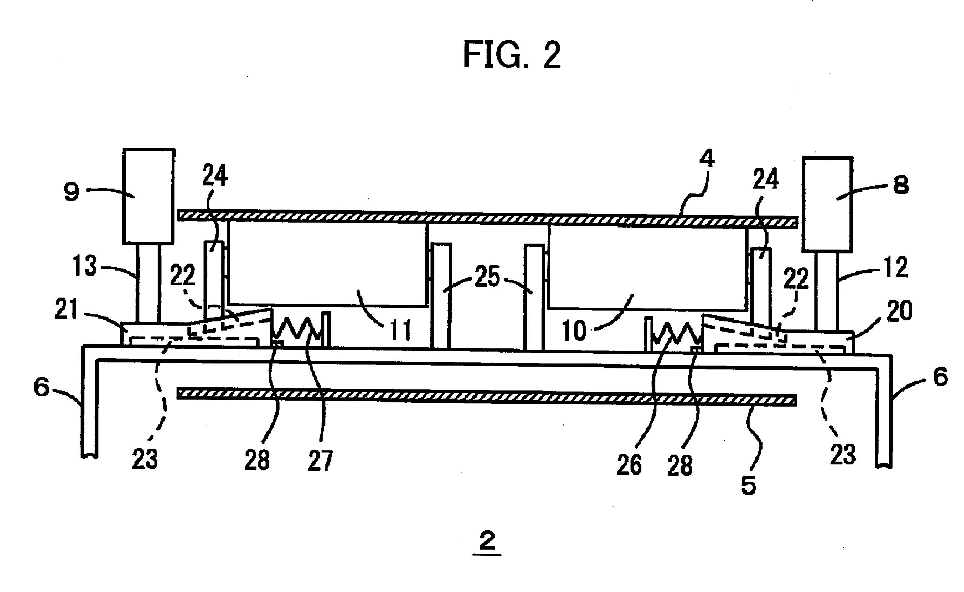

Figs. 1 to 4 illustrate a belt conveyor 2 according to the embodiment and a modification thereof. The belt conveyor 2 includes an outgoing belt 4 and a returning belt 5, each made of steel, rubber, or the like. A steel belt is particularly suitable for the present invention, as the meandering steel belt raises a dangerous situation. In this specification, right and left each indicate a direction orthogonal to traveling directions of the belts 4 and 5 in a horizontal plane, and each of the belts 4 and 5 travels in, for example, a horizontal direction.

There is provided a frame 6 from right to left to be interposed between the outgoing belt 4 and the returning belt 5, and a pair of detection rollers 8 and 9 are disposed outside right and left ends of the outgoing belt 4. A pair of right and left correction rollers 10 and 11 are provided to be in contact with a rear face of the outgoing belt 4. Support rods 12 and 13 of the detection rollers 8 and 9 are fixed to right and left cams 20 and 21 which each have a cam groove 22. The cam groove 22 is inclined from a center down to the right or left end of the outgoing belt 4. The cams 20 and 21 are shifted slidably to right and left by raised parts 23 provided on the frame 6.

Each of the correction rollers 10 and 11 is supported by a post 25 around the center of the outgoing belt 4, and is supported by a post 24 on the outer end of the outgoing belt 4. The cams 20 and 21 are biased toward the center of the rear face of the outgoing belt 4 by biasing members 26 and 27, respectively. When the outgoing belt 4 is located at a normal position, the detection roller 8 is regulated by a stopper 28 at a position not in contact with the outgoing belt 4.

There are disposed, along the belts 4 and 5, a plurality of meandering correctors each including the frame 6 to the stopper 28. There are also disposed idler rollers, driving rollers, and the like between the meandering correctors. According to the present embodiment, each of the cams 20 and 21 is provided with the cam groove 22 to guide the post 24. Alternatively, each of the cams 20 and 21 may be provided with a projection to guide the post 24. Further alternatively, each of the cams 20 and 21 may be provided with a raised part to be slidable in a groove formed in the frame 6.

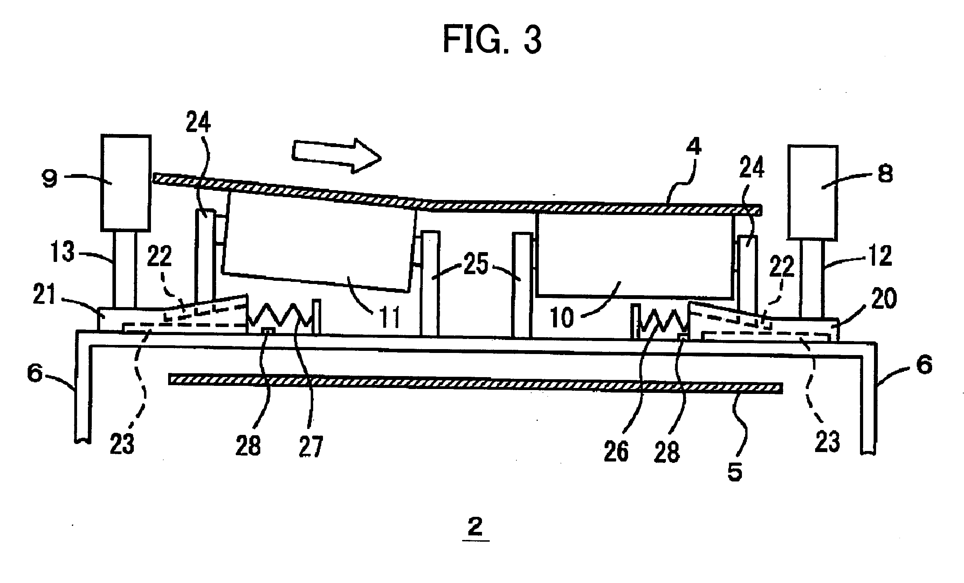

Described below are operations according to the present embodiment. As exemplarily illustrated in Fig. 3, the outgoing belt 4 meanders to left to slide the left detection roller 9. The cam 21 is then slid to left via the support rod 13 and the post 24 is thus lifted up along the cam groove 22, so that the correction roller 11 is inclined from the outer end down to the center of the belt. The degree of inclination of the correction roller 11 is increased as the outgoing belt 4 meanders more dramatically. Inclination of the correction roller 11 cancels meandering of the outgoing belt 4. When the meandering is canceled, the cam 21 is returned to a normal position by the biasing member 27 and is stopped by the stopper 28.

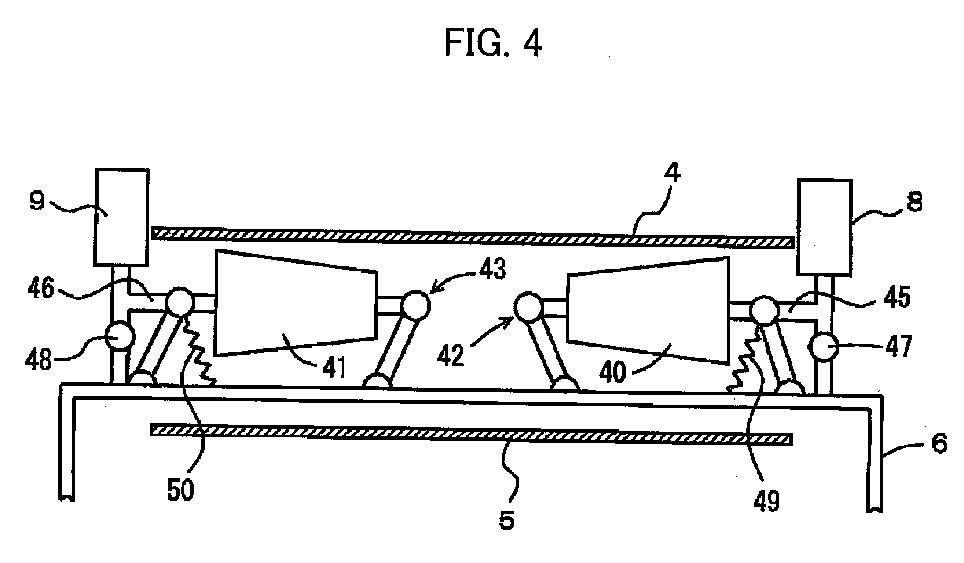

Fig. 4 illustrates a modified meandering corrector. There are provided a pair of right and left correction rollers 40 and 41 each of which has a conical shape and is inclined from the outer end down to the center of the belt 4. Each of the meandering correctors also includes four-joint links 42 and 43, arms 45 and 46 which transmit motions of the detection rollers 8 and 9 to the four-joint links 42 and 43, respectively, and rotational axes 47 and 48. In a case where the belt 4 meanders and the detection roller 9 is pressed by the belt 4 to be rotated about the rotational axis 48, the correction roller 41 is lifted up by the four-joint link 43 to cancel meandering of the belt 4. When the meandering is canceled, the correction roller 41 is lifted by a biasing member 50 down to a position not in contact with the belt 4. It should be noted that the right correction roller 40 operates similarly to the left correction roller 41.
While the present invention has been described with respect to preferred embodiments thereof, it will be apparent to those skilled in the art that the disclosed invention may be modified in numerous ways and may assume many embodiments other than those specifically set out and described above. Accordingly, the appended claims are intended to cover all modifications of the present invention that fall within the true spirit and scope of the present invention.

## Claims

1. A belt conveyor comprising a corrector for a meandering belt, the meandering corrector including:
a pair of right and left detection rollers which are disposed outside both outer ends in a width direction of the belt;
at least a pair of right and left correction rollers which are disposed on right and left sides under the belt so as to be in contact with a rear face of the belt to correct the meandering belt; and
inclining means for inclining, in a case where one of the right and left detection rollers is pressed by the belt, the correction roller disposed on one of right and left sides identical to the pressed detection roller such that the correction roller is inclined from the pressed detection roller down to a center of the belt.

2. The belt conveyor according to claim 1, wherein the inclining means has:
a pair of right and left cams each of which has a face inclined from the outer end down to the center of the belt and is shifted to right and left below the rear face of the belt in conjunction with the corresponding detection roller; and
supporting members which are lifted along the inclined faces of the cams and regulate levels of the correction rollers in right and left directions of the belt.

3. The belt conveyor according to claim 2, further comprising:
a frame which is disposed to be across from right to left below the rear face of the belt; and
a pair of biasing members which bias the pair of cams toward the center of the belt, wherein
the pair of cams are attached to the frame so as to be slidable to right and left, and
lower ends of support rods of the pair of detection rollers are attached respectively to the pair of right and left cams.
